# EUROPEAN PATENT APPLICATION

(11) **EP 3 495 226 A1**
(43) Date of publication of application: **12.06.2019**
(21) Application number: 18210760.7
(22) Date of filing: 06.12.2018
(51) Int. Cl.: B61D 17/00, B60J 10/248, B60J 10/30, B60J 10/84, B60J 10/20, B60J 10/24, F16J 15/02, F16J 3/04, F16J 15/52

(54) **SEALING GASKET FOR RAILWAY VEHICLE**

(30) Priority: 06.12.2017 FR 1761712
(71) Applicant: Saint-Gobain Performance Plastics France, 89120 Charny Orée de Puisaye (FR)
(72) Inventor: Didier, Robert, 69740 Genas (FR); Guidici, Julien, 69500 Bron (FR)
(74) Representative: Zimmermann & Partner Patentanwälte mbB

(57) **Abstract**

A sealing gasket for producing sealing between a body of a railway vehicle (10) and an air conditioning unit (30) topping said body, may include a lower gasket part (60) provided with a receiving slot (62) suitable for receiving a rib of the body and an upper gasket part (70) opposite the lower gasket part in a main direction (Y1), and suitable for sealably bearing against the air conditioning unit (30). According to the invention, the hardness of the lower gasket part (60) may be greater than that of the upper gasket part (70).

## Description

### TECHNICAL FIELD

The present description relates to a sealing gasket for a railway vehicle, with an engine or towed, in particular a train, subway tram car or carriage.

More specifically, the present invention relates to a gasket intended to produce sealing between a body of such a railway vehicle and an air conditioning unit topping said body.

### BACKGROUND ART

A railway vehicle, intended to transport passengers or goods, typically may include a body delimited by a sheet metal enclosure, vertically topped by one or several air conditioning unit(s), fastened to the body by mechanical means, at a small distance from the sheet metal enclosure.

The intercalary space, arranged between the upper face of the sheet metal enclosure and the lower face of the air conditioning unit, houses air conditioning fluid circulation ducts, as well as many electrical and electronic circuits of the vehicle.

These ducts and circuits having to be protected from rain and bad weather to avoid electrical risks and damage of the components, the intercalary space may be sealed using sealing means positioned on its periphery.

In certain circumstances, a sealing gasket can be glued or rivited on the periphery of the air conditioning unit. The sealing gasket is intended to remain attached to the body under the effect of the weight of the air conditioning unit. It has, however, been noted that due to significant vibrations of the vehicle during use, the gasket tends to unstick from the body, allowing water and dust to enter.

More recently, it has been considered to fasten the gasket on the vehicle body instead of the air conditioning unit, provided, to that end, with a continuous rib protruding on its upper face. The sealing means in this case assume the form of a gasket, the upper part of which bears sealably against the air conditioning unit and the lower part of which, provided with an appropriate slot, may be intended to engage on the rib and grip it under the effect of a prestressed metal insert, overmolded to the inside of the gasket. This solution allows effective fastening, but has the drawback of being complicated and very costly to implement, due to the integration of the prestressed insert inside the gasket.

### SUMMARY

The present invention aims to overcome the drawbacks of the prior solutions described above.

More specifically, the invention aims to provide a sealing gasket for a railway transport vehicle, making it possible to ensure good sealing of the intercalary space defined between the air conditioning unit(s) and the body of the vehicle, but that is inexpensive to manufacture.

The invention thus relates to a sealing gasket for producing sealing between a body of a railway vehicle and an air conditioning unit topping said body, said gasket may include a lower gasket part provided with a receiving slot suitable for receiving the rib of the body and an upper gasket part opposite the lower gasket part in a main direction, said upper part being suitable for sealably bearing against the air conditioning unit, the gasket being characterized in that the hardness of the lower gasket part is greater than that of the upper gasket part.

The gasket according to the invention may be a gasket having at least two different hardnesses (bi-hardness): Its lower part, oriented toward the body, may be rigid enough to allow solid fastening to the rib of the body, in particular during mounting or in case of maintenance, when the air conditioning unit is not yet in place or is temporarily removed. Its upper part may in turn be more flexible to guarantee good sealing with the air conditioning unit.

Such a bi-hardness gasket may in particular be obtained by coextrusion of two elastomers with different hardnesses, for example silicones.

The hardnesses of the lower and upper gasket parts are typically expressed in shore A hardnesses measured according to standard ISO 7619-1:2010.

According to one example, the upper gasket part has a shore A hardness may be between 25 and 65, preferably between 55 and 65.

According to one example, the lower gasket part has a shore A hardness may be between 65 and 95, preferably between 75 and 85.

According to one example, the difference in shore A hardness between the lower and upper gasket parts may be at least 10, preferably at least 15, preferably at least 20.

According to one example, the gasket may be equipped with retaining means protruding inside the receiving slot. These retaining means ensure effective gripping of the rib, preventing its disengagement. These retaining means for example may include at least one tongue or tooth, preferably a plurality of tongues or teeth, oriented toward the bottom of the receiving slot, thereby opposing a movement of the rib in the opposite direction.

According to one example, the upper gasket part may include at least one sealing lip at its end intended to come into contact with the air conditioning unit. The at least one sealing lip is gripped against the air conditioning unit, by its own elasticity. Preferably, the upper gasket part may include, at its end, two sealing lips oriented in different directions, and intended to come into contact with the air conditioning unit.

According to one example, the upper gasket part may include an elastic part suitable for deforming elastically in the main direction. Advantageously, this elastic part forms an intermediate part between the lower gasket part and the end (if applicable, comprising the sealing lip(s)) intended to create the sealed contact with the air conditioning unit.

The elastic part may be for example a cellular structure. Such a cellular structure preferably may include at least one cell forming a bellows, defining a closed cavity delimited by V-shaped or U-shaped side walls.

The cellular structure preferably may include at least two cells juxtaposed in the main direction.

The invention also relates to a railway vehicle, with an engine or towed, that may include a body and at least one air conditioning unit topping said body in a vertical direction, the body may include at least one continuous rib situated across from the air conditioning unit in the vertical direction, and the railway vehicle further may include at least one sealing gasket as previously defined between said body and said air conditioning unit with its main direction parallel to the vertical direction, the slot of the lower gasket part receiving the rib of the body, and the upper gasket part bearing sealably against the air conditioning unit.

Several example embodiments are described in this description. Unless otherwise specified, the features described in connection with any one example embodiment can be applied to another example embodiment.

### BRIEF DESCRIPTION OF THE DRAWINGS

The details of the invention will be better understood upon reading the following description of one embodiment of the invention. In the context of the present invention, other embodiments are of course possible, the following description being provided solely as an illustration and not having to be considered limiting in any of its described aspects.
- FIG. 1 is a schematic cross-section of a railway vehicle according to the invention;
- FIG. 2 is a perspective top view of the body of FIG. 1 (the elements topping the body being omitted);
- FIG. 3 is an enlarged view of detail III of FIG. 1;
- FIG. 4 is a detail view of the gasket of FIG. 1, in the non-compressed state;
- FIG. 5 shows the gasket of FIG. 4 in its maximal compression state.

### DETAILED DESCRIPTION OF THE PREFERRED EMBODIMENT(S)

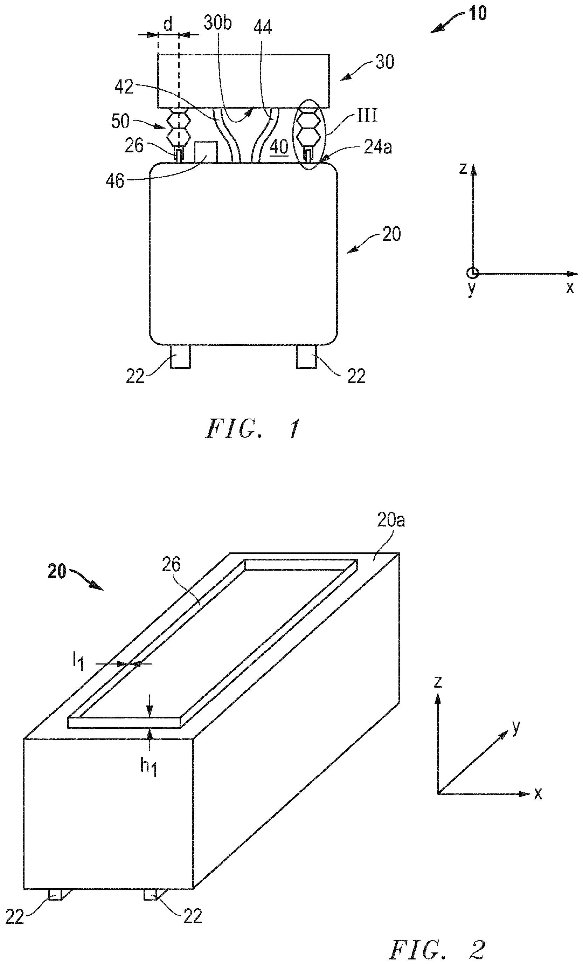

FIG. 1 illustrates a cross-section of a train carriage 10 according to the present invention.

The carriage 10 may include:
- a body 20 intended to house travelers or goods, which may include a main enclosure 24 generally made from sheet metal, mounted on a plurality of wheels 22 suitable for cooperating with the rails of a railroad track (not shown), and
- at least one air conditioning unit 30 positioned above the body 20 in the vertical direction Z of the carriage, and fastened to the body 20 by mechanical means known in themselves (not shown).

The vertical direction Z of the carriage, generally orthogonal to the upper face 24a of the enclosure 24 or to the contact plane P of the wheels 22, generally corresponds, in practice, to the direction of gravity.

A horizontal direction is orthogonal to this vertical direction Z.

The air conditioning unit 30 typically has a metal case with a substantially parallelepiped shape with horizontal dimensions smaller than those of the body 20, typically 2 m * 4 to 5 m.

An intercalary space 40 may be formed vertically between the air conditioning unit 30 and the body 20.

As previously explained, this intercalary space 40 houses air conditioning fluid circulation ducts 42 and/or electrical circuits 44 and/or electronic circuits 46, which must be protected from outside attacks (air, water, dust).

The intercalary space 40 may therefore be sealed by sealing means described below.

As illustrated in FIG. 1, the main enclosure 24 of the body 20 bears, on its upper face (roof) 24a, at least one continuous rib 26 closed on itself, illustrated in more detail in FIG. 2.

The rib 26, which limits the horizontal expanse of the intercalary space 40, faces, over its entire length, the lower face 30b of the air conditioning unit 30, in the vertical direction Z.

The rib 26 extends vertically (and orthogonally to the upper face 24a of the enclosure 24). It assumes the form of a ribbon, in particular made from steel, for example welded to the upper face 24a of the enclosure 24, with a constant thickness 11 that may be between 2 and 6 mm, preferably between 2 and 4 mm, and with a height h1 (measured vertically) that may typically be between 10 and 30 mm.

The rib 26 typically forms a rectangular frame, with corners that are preferably slightly rounded, horizontal dimensions that are generally substantially equal to those of the air conditioning unit. Preferably, the rib may be horizontally offset by a distance d, for example by several centimeters, relative to the lateral edges of the air conditioning unit.

The means ensuring the sealing between the body 20 and the air conditioning unit 30 may include a continuous gasket 50 closed on itself, intended to cooperate with this rib 26.

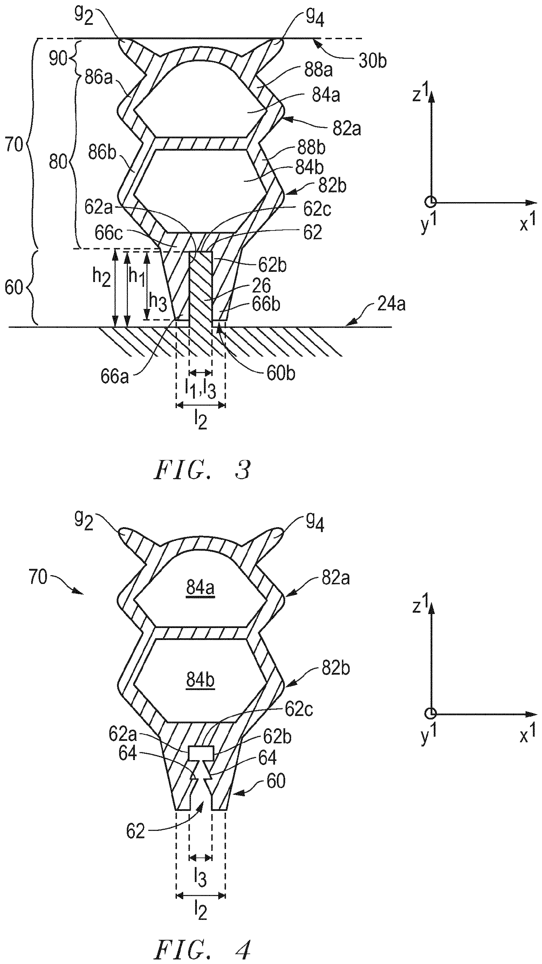

The sealing gasket 50, illustrated in more detail in FIG. 3, may be broken down into a lower gasket part 60 intended for fastening thereof on the body 20, and an upper gasket part 70 intended to produce the sealing with the air conditioning unit 30, said upper part 70 being opposite the lower gasket part 60 in a direction called main gasket direction Z1.

In practice, after assembly, this main gasket direction Z1 is parallel to the vertical direction Z of the carriage 10, and therefore to the direction of gravity.

Defined, at any point of the gasket 50, is a longitudinal direction Y1 extending in the direction of the length of the gasket, orthogonally to the main direction Z1. Unless otherwise indicated, the lengths mentioned below are measured in this longitudinal direction.

Lastly, a lateral direction X1 is defined, orthogonal to the aforementioned main Z1 and longitudinal Y1 directions. Unless otherwise indicated, the widths defined below are measured in this lateral direction.

According to the invention, the lower 60 and upper 70 gasket parts may have different hardnesses. The upper part 70 may be more flexible, to ensure good sealing. The lower part 60 may be more rigid, to guarantee solid fastening on the body, withstanding vibrations and impacts, and guaranteed even in case of removal from the air conditioning unit 30 in the context of maintenance operations.

The gasket 50 may be for example obtained by co-extruding two different elastomeric materials, one for each lower or upper part of the gasket.

The material making up the upper gasket part 70 advantageously may have a shore A hardness of between 25 and 65, preferably between 55 and 65, still more preferably 60, and the material making up the lower gasket part 60, may have a shore A hardness of between 65 and 95, preferably of between 75 and 85, still more preferably 80. It is recalled that the shore A hardness is measured according to standard ISO 7619-1:2010.

The difference in shore A hardness between the lower 60 and upper 70 gasket parts may preferably be at least 10, preferably at least 15, preferably at least 20.

As illustrated in FIG. 3, the lower gasket part 60 for example may have a minimum width 12 of between 10 and 20 mm, and a height h2 may typically be between 12 and 20 mm.

It globally has an inverted U-shaped profile comprising two side branches 66a, 66b and a base 66c, delimiting a slot 62 emerging on its lower face 60b, the slot 62 being delimited by two facing side walls 62a, 62b, and a bottom 62c connecting said side walls.

The width 13 of the slot 62 at its emerging end may be for example between 2 and 6 mm.

It should be noted that the side walls 62a, 62b can be parallel like in the illustrated example, or may not be. According to another example, the slot may in particular flare toward the bottom 62c.

The depth h3 of the slot 62, measured in the main direction Z1 between the end of the lower gasket part 60 where it emerges all the way to the bottom 62c, may be typically between 10 and 20 mm.

The lower gasket part 60 may be engaged, by this slot 62, called receiving slot, on the rib 26 of the body 20. In practice, after mounting, the distal end of the rib 26 abuts against the bottom 62c of the slot 62, as illustrated in FIG. 3.

At minimum, the rib 62 may be retained by the adherence with the walls of the slot 62. However, preferably, the respective widths of the rib 26 and the slot 62 are chosen to produce a pinching effect of the rib 26. In practice, the width 13 of the slot 62 may be then chosen to be smaller than the width of the rib 26, at least at its emerging end. As previously claimed, the slot 62 may then have either a constant width over its entire expanse in the main direction Z1, or a variable width, generally greater than or equal to the minimum value measured at the emerging end. Consequently, the two branches 66a, 66b are separated during mounting on the rib 26, and due to the elasticity of the material, form said clamp, which applies a lateral pinching force on the rib 26.

Due to its hardness, the lower gasket part 60 makes it possible to grip, firmly retain the rib 26, and avoid separation of the gasket 50 in case of strong biases, or when the air conditioning unit is not in place, for example during mounting or during maintenance operations. Such a connection must typically withstand a pulling out force of at least 30 N.

According to one advantageous arrangement of the invention illustrated in FIG. 4, additional retaining means, increasing the pulling out strength of the gasket 50, protrude inside the receiving slot 62.

These retaining means can assume the form of one or several tongue(s) 64 that are continuous over the entire length of the gasket 50, formed on one or both side face(s) 62a, 62b of the slot 62, and here oriented toward the bottom 62c. When a tensile bias is exerted, the gasket 50 and the rib 26 are prevented from disengaging due to the tongues 64, which, sufficiently rigid, do not deform and retain the rib 26.

In the illustrated example, the tongues 64 are situated across from one another in the lateral direction X1. As an alternative, they can also be offset relative to one another in the main direction Z1.

As an alternative, the retaining means may assume the form of localized teeth, preferably oriented toward the bottom of the slot.

The retaining means can also be formed by a combination of tongues and teeth, or any other means suitable for preventing the disengagement of the rib 26 and the gasket 50, in the main direction Z1.

The upper gasket part 70 may be intended to react the forces related to the impacts and vibrations of the carriage 10, while ensuring sealed bearing on the air conditioning unit 30, continuous over the entire length of the gasket 50.

The upper gasket part 70 may be suitable for deforming in the vertical direction Z in case of impacts or vibrations of the carriage 10. It forms a spring so to speak, compressed continuously, recalled against the air conditioning unit 30 by its own elasticity.

According to one example embodiment, the upper gasket part 70 may include, near the lower part 60, a cellular elastic part 80.

In the example illustrated in FIG. 4, the cellular structure 80 has an accordion shape. It may be formed by two cells 82a, 82b, each defining a closed cavity 84a, 84b, laterally delimited by deformable walls 86a, 88a; 86b, 88b with a V-shaped or U-shaped section. Each cell forms a bellows, suitable for compressing or expanding in the main direction Z1, and thus absorbing the vibrations of the carriage during operation. Such a cellular structure has an optimal compressibility in the main direction Z1 with restricted widening in the lateral direction X1.

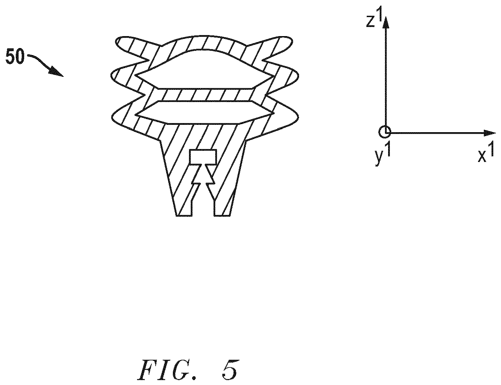

FIG. 5 illustrates the gasket 50 of FIG. 4 in its maximal compression state. The gasket may be only very slightly widened, and therefore only very moderately encroaches on the inner volume of the intercalary space 40.

The upper gasket part 70 further may include, topping the elastic part 80, an upper end part 90 here formed by two sealing lips 92, 94 oriented in opposite directions, and intended to form a sealed contact with the lower face 30b of the air conditioning unit 30.

As an alternative, the upper gasket part may include a number of lips different from two, for example a single lip or plurality of lips oriented in the same direction or in opposite directions, or any other elements suitable for producing the sealing with the air conditioning unit.

Many different aspects and embodiments are possible. Some of those aspects and embodiments are described herein. After reading this specification, skilled artisans will appreciate that those aspects and embodiments are only illustrative and do not limit the scope of the present invention. Embodiments may be in accordance with any one or more of the items as listed below.
Embodiment 1. A sealing gasket for producing sealing between a body of a railway vehicle (10) and an air conditioning unit (30) topping said body, said gasket (50) comprising a lower gasket part (60) provided with a receiving slot (62) suitable for receiving the rib of the body and an upper gasket part (70) opposite the lower gasket part in a main direction (Y1), and suitable for sealably bearing against the air conditioning unit (30), the gasket being characterized in that the hardness of the lower gasket part (60) is greater than that of the upper gasket part (70).
Embodiment 2. The gasket (50) according to embodiment 1, wherein the upper gasket part (70) has a shore A hardness comprised between 25 and 65.
Embodiment 3. The gasket (50) according to embodiment 1, wherein the lower gasket part (60) has a shore A hardness comprised between 65 and 95.
Embodiment 4. The gasket (50) according to any one of embodiments 1 to 3, wherein a difference in shore A hardness between the lower (60) and upper (70) gasket parts is at least 10.
Embodiment 5. The gasket (50) according to any one of embodiments 1 to 4, wherein the lower gasket part (60) is a silicone.
Embodiment 6. The gasket (50) according to any one of embodiments 1 to 5, wherein the upper gasket part (70) is a silicone.
Embodiment 7. The gasket (50) according to any one of embodiments 1 to 3, wherein the lower (60) and the upper (70) gasket parts are silicones.
Embodiment 8. The gasket (50) according to any one of embodiments 1 to 7, wherein the gasket (50) is equipped with retaining means (64) protruding inside the receiving slot (62).
Embodiment 9. The gasket (50) according to embodiment 8, wherein the retaining means (64) comprise at least one tongue or tooth oriented toward the bottom of the receiving slot (62).
Embodiment 10. The gasket (50) according to any one of embodiments 1 to 9, wherein the upper gasket part (70) comprises at least one sealing lip (92, 94) at its end intended to come into contact with the air conditioning unit (30).
Embodiment 11. The gasket (50) according to any one of embodiments 1 to 10, wherein the upper gasket part (70) comprises a cellular structure (80) suitable for deforming elastically in the main direction (Y1).
Embodiment 12. The gasket (50) according to embodiment 11, wherein the elastic cellular structure (80) comprises at least one cell (82a, 82b) forming a bellows, defining a closed cavity (84a, 84b) delimited by V-shaped or U-shaped side walls (86a, 88a; 86b, 88b).
Embodiment 13. The gasket (50) according to embodiment 11, wherein the cellular structure (80) comprises at least two cells (82a, 82b) juxtaposed in the main direction (Y1).
Embodiment 14. A railway vehicle (10), with an engine or towed, comprising a body (20) and at least one air conditioning unit (30) topping said body in a vertical direction (Z), the body (20) comprising at least one continuous rib (26) situated across from the air conditioning unit (30) in the vertical direction (Z), and the railway vehicle further comprising at least one sealing gasket according to any one of embodiments 1 to 13 between said body (20) and said air conditioning unit (30) with its main direction (Z1) parallel to the vertical direction (Z), the slot of the lower gasket part (60) receiving the rib (26) of the body (20), and the upper gasket part (70) bearing sealably against the air conditioning unit (30).

## Claims

1. A sealing gasket for producing sealing between a body of a railway vehicle (10) and an air conditioning unit (30) topping said body, said gasket (50) comprising a lower gasket part (60) provided with a receiving slot (62) suitable for receiving the rib of the body and an upper gasket part (70) opposite the lower gasket part in a main direction (Y1), and suitable for sealably bearing against the air conditioning unit (30), the gasket being **characterized in that** the hardness of the lower gasket part (60) is greater than that of the upper gasket part (70).

2. The gasket (50) according to claim 1, wherein the upper gasket part (70) has a shore A hardness comprised between 25 and 65.

3. The gasket (50) according to claim 1, wherein the lower gasket part (60) has a shore A hardness comprised between 65 and 95.

4. The gasket (50) according to any one of claims 1 to 3, wherein a difference in shore A hardness between the lower (60) and upper (70) gasket parts is at least 10.

5. The gasket (50) according to any one of claims 1 to 4, wherein the lower gasket part (60) is a silicone.

6. The gasket (50) according to any one of claims 1 to 5, wherein the upper gasket part (70) is a silicone.

7. The gasket (50) according to any one of claims 1 to 4, wherein the lower (60) and the upper (70) gasket parts are silicones.

8. The gasket (50) according to any one of claims 1 to 7, wherein the gasket (50) is equipped with retaining means (64) protruding inside the receiving slot (62).

9. The gasket (50) according to claim 8, wherein the retaining means (64) comprise at least one tongue or tooth oriented toward the bottom of the receiving slot (62).

10. The gasket (50) according to any one of claims 1 to 9, wherein the upper gasket part (70) comprises at least one sealing lip (92, 94) at its end intended to come into contact with the air conditioning unit (30).

11. The gasket (50) according to any one of claims 1 to 10, wherein the upper gasket part (70) comprises a cellular structure (80) suitable for deforming elastically in the main direction (Y1).

12. The gasket (50) according to claim 11, wherein the elastic cellular structure (80) comprises at least one cell (82a, 82b) forming a bellows, defining a closed cavity (84a, 84b) delimited by V-shaped or U-shaped side walls (86a, 88a; 86b, 88b).

13. The gasket (50) according to claim 11, wherein the cellular structure (80) comprises at least two cells (82a, 82b) juxtaposed in the main direction (Y1).

14. A railway vehicle (10), with an engine or towed, comprising a body (20) and at least one air conditioning unit (30) topping said body in a vertical direction (Z), the body (20) comprising at least one continuous rib (26) situated across from the air conditioning unit (30) in the vertical direction (Z), and the railway vehicle further comprising at least one sealing gasket according to any one of claims 1 to 13 between said body (20) and said air conditioning unit (30) with its main direction (Z1) parallel to the vertical direction (Z), the slot of the lower gasket part (60) receiving the rib (26) of the body (20), and the upper gasket part (70) bearing sealably against the air conditioning unit (30).
